# EUROPÄISCHE PATENTSCHRIFT

(11) **EP 2 437 949 B1**
(45) Veröffentlichungstag und Bekanntmachung des Hinweises auf die Patenterteilung: **07.09.2016**
(21) Anmeldenummer: 10730055.0
(22) Anmeldetag: 25.05.2010
(51) Int. Cl.: B60G 7/00, F16C 27/06, F16F 1/393

(54) **GELENK- UND/ODER LAGERANORDNUNG MIT EINER ELASTISCHEN ZWISCHENLAGE**
JOINT AND/OR BEARING ASSEMBLY HAVING AN ELASTIC INTERMEDIATE LAYER
SYSTÈME D'ARTICULATION ET/OU DE PALIER POURVU D'UNE COUCHE INTERMÉDIAIRE ÉLASTIQUE

(30) Priorität: 04.06.2009 DE 102009026739
(43) Veröffentlichungstag der Anmeldung: 11.04.2012
(73) Patentinhaber: ZF Friedrichshafen AG, 88046 Friedrichshafen (DE)
(72) Erfinder: BRUNNEKE, Hans-Gerd, 49124 Georgsmarienhütte (DE); LÖSCHE, Christian, 32351 Stemwede (DE)
(86) Internationale Anmeldenummer: PCT/DE2010/050031
(87) Internationale Veröffentlichungsnummer: WO 2010/139314

(56) Entgegenhaltungen:
- EP-A1- 0 226 702
- EP-A1- 0 351 689
- EP-A1- 0 389 363
- EP-A1- 0 577 536
- EP-A1- 1 837 210
- WO-A1-01/40001
- DE-A1- 3 613 123
- FR-A1- 2 691 767

## Beschreibung

Gelenkanordnung mit einer elastichen Zwischenlage Die Erfindung betrifft eine Gelenkanordnung für ein Kraftfahrzeug bei der eine von einem Achskörper durchgriffene Gelenkkugel gegenüber einem die Gelenkkugel umgebenden Gehäuse über eine gummielastische Zwischenlage beweglich gelagert ist, nach dem Oberbegriff des Anspruchs 1.

Es ist bekannt, Gelenkanordnungen so auszubilden, dass die beweglich in einem Gehäuse gelagerte Gelenkkugel nicht gegenüber einer aufnehmenden Gelenkschale, etwa aus Kunststoff, gleitend bewegt werden kann, sondern zwischen der Gelenkkugel und dem Gehäuse eine gummielastische Zwischenlage angeordnet ist. Diese Zwischenlage bietet gute Komforteigenschaften sowohl hinsichtlich der Dämpfung als auch hinsichtlich der Geräuschentwicklung. Eine Gelenkanordnung mit einer derartigen gummielastischen Zwischenlage ist im Prinzip aus der DE 36 13 123 A1 bekannt. Dabei kann ein hoher Drehwinkel einer in der Gelenkkugel aufgenommenen Gelenkachse gegenüber dem Gehäuse problematisch sein, insbesondere in Verbindung mit einer radial wirkenden Kraft, da es zu einem Abreißen der gummielastischen Lage von der Innenwandung des Gehäuses oder der Lagerschale kommen kann, so dass dort ein Abrieb verursacht wird und die Gelenkeigenschaften langfristig verschlechtert werden.

Der Erfindung liegt das Problem zugrunde, hier eine Verbesserung zu erreichen.

Die Erfindung löst dieses Problem durch eine Gelenkanordnung mit den Merkmalen des Anspruchs 1. Hinsichtlich vorteilhafter Ausgestaltungen und Weiterbildungen der Erfindung wird auf die weiteren Ansprüche 2 bis 14 verwiesen.

Mit der Erfindung ist eine Gelenkanordnung geschaffen, bei der einerseits der Komfort eines Molekulargelenks mit einer gummielastischen Zwischenlage erhalten bleibt, andererseits jedoch durch die Drehbarkeit des Achskörpers gegenüber der Gelenkkugel die Sicherheit eines Gleitlagers gegen Abriss oder Durchrutschen der Verbindung gebildet ist. Damit werden die Vorteile eines Molekulargelenks und einer Gleitlagerung miteinander vereint.

Insbesondere kann dabei für einen hohen Komfort die gummielastische Zwischenlage aus einem Gummiwerkstoff ausgebildet sein. Die Dämpfungseigenschaften eines Molekulargelenks sind abhängig von deren Härte ausgeprägt. Besonders vorteilhaft sind sowohl der Achskörper als auch eine ihm zugewandte Grenzfläche der Gelenkkugel jeweils über ihren gesamten Kontaktbereich formstabil, so dass sich auch trotz einer hohen - auch radial nach innen wirkenden - Vorspannung der gummielastischen Zwischenlage die Lagerung des Achskörpers unbeeinflusst bleibt und dieser mit stets gleicher, sehr kleiner Kraft "frei" drehbar ist.

Insbesondere durch diese nur geringe erforderliche Kraft zum Drehen des Achskörpers ist auch die Montage vereinfacht, da nicht erst wie bei einer Direktanlage des Achskörpers an ein Elastomer hohe Reibungskräfte mittels Werkzeugkraft zur Ausrichtung des Achskörpers überwunden werden müssen, sondern dieser kann von Hand in die Gelenkkugel eingesetzt und auch leicht von Hand so weit gedreht werden, dass seine Ausrichtung zur weiteren Montage an das Fahrzeug passend ist. Besonders vorteilhaft ist dabei zur Drehung des Achskörpers in der Gelenkkugel ein Drehmoment von weniger als 1 Nm erforderlich.

Um die Formstabilität und gute tribologische Eigenschaften auch bei hoher Belastung sicherstellen zu können, ist vorteilhaft zumindest die dem Achskörper zugewandte Grenzfläche der Gelenkkugel als metallische Oberfläche ausgebildet. Insbesondere können die dem Achskörper zugewandte Grenzfläche der Gelenkkugel und die der Gelenkkugel zugewandte Grenzfläche des Achskörpers aus Stahl, insbesondere Nitrierstahl, oder einem Nitrierguss, gebildet sein.

Besonders günstig für eine Dauerhaltbarkeit ist die dem Achskörper zugewandte Grenzfläche als radial innen liegende Fläche eines formstabilen Hülsenkörpers ausgebildet ist, an die der elastische Werkstoff der Zwischenlage anvulkanisiert ist; auch ein Kleben oder anderer fester Zusammenhalt ist möglich.

In jedem Fall ist es besonders gut für das Vermeiden eines Abrisses, wenn dabei kann zwischen dem Hülsenkörper und der ihm zugewandten radialen Innenfläche der Zwischenlage ein fester, eine Relativbewegung jederzeit ausschließender Kontakt besteht.

Erfindungsgemäß bildet der Hülsenkörper einstückig die Gelenkkugel.

Auch ist für eine präzise Arbeit der Gelenkanordnung hilfreich, wenn der Achskörper im Hülsenkörper durch Kragen oder ähnliche axiale Sicherungen gegen eine axiale Bewegung gegenüber dem Hülsenkörper gesichert ist. Damit sind nur Torsions- und Drehbewegungen in der Gelenkanordnung möglich, nicht aber eine axiale Verschiebung des Achskörpers.

Für eine gute Gleitbeweglichkeit zwischen dem Achskörper und der Gelenkkugel ist dort vorteilhaft ein nur dünner Spalt, etwa mit einer Stärke von bis zu 0,25 Millimetern, ausgebildet. Ein besonders dünner Spalt von etwa einem Zehntel Millimeter sichert dabei eine spielfreie Lagerung des Achskörpers.

Dabei kann der Spalt zumindest teilweise mit Fett oder einem anderen Schmiermittel befüllt sein und somit das Gleiten der Teile gegeneinander noch erleichtern.

Auch eine reibungsvermindernde Beschichtung des Achskörpers und/oder der Gelenkkugel ist möglich.

Weiterhin ist es insbesondere als Montagehilfe sehr günstig, wenn der Achskörper über seinen axialen Verlauf in zumindest zwei Teile geteilt ist und damit sein Einstecken von beiden Seiten her in die Gelenkkugel ermöglicht.

Die Teile des Achskörpers können über eine Presspassung aneinander halterbar sein, so dass die Gelenkanordnung als fertig montierte und vorkonfektionierte Baueinheit transportiert werden kann, ehe sie an das Fahrzeug anmontiert wird. Durch die Presspassung ist ein Auseinanderfallen der Teile der Achse auch bereits vor der Montage der Baueinheit verhindert.

Eine weitere Montageerleichterung bei Minimierung der Bauteilanzahl ergibt sich, wenn die Teile des Achskörpers als Gleichteile ausgebildet sind, die direkt oder über ein separates Verbindungsstück aneinander halterbar sind.

Sofern günstig radial erweiterte Kragen des Achskörpers von der Gelenkkugel axial beabstandet sind, ist auch hier die Beweglichkeit des Achskörpers gegenüber der Gelenkkugel nicht eingeschränkt.

Auch hier kann der Abstand klein gehalten werden und wiederum bis zu 0,25 Millimeter betragen.

Mit der Erfindung können auch in ein Gehäuse und eine Gelenkkugel unterschiedliche Achskörper, etwa mit unterschiedlichen Bohrungsabständen, einsetzbar sein. Die Flexibilität ist dadurch sehr hoch.

Eine solche Gelenkanordnung kann insbesondere für Nutzkraftwagen (NKW) oder Offroad-Fahrzeuge eingesetzt werden, bei denen es bekannt ist, neben der eigentlichen tragenden Achsaufhängung, die die vertikal wirkende Gewichtskraft der Achse abfängt, eine zusätzliche Abstützung vorzusehen, die zum Beispiel einzelne, schräg verlaufende Lenker oder einen Dreieckslenker umfasst, der mit seiner Spitze an einem von einem zapfenartigen Haltekörper getragenen Gelenkkopf angreift und anderenends an Längsrahmenteilen des Chassis gehalten ist. Ein solcher Dreieckslenker kann darüber zum Beispiel eine Seitenführung des Achskörpers übernehmen.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: einen perspektivischen und schematischen Ausschnitt eines Nutzkraftwagens im Bereich einer Gelenkanordnung zur Verbindung eines im Differentialbereich erweiterten Achskörpershier einer Hinterachse - mit zwei V-förmig zulaufenden Lenkern als weiterer Abstützung des Achskörpers, wobei zumindest an der Spitze der Dreieckslenkeranordnung eine Gelenkanordnung in einer erfindungsgemäßen Ausbildung vorgesehen ist,
- Fig. 2: eine teilweise aufgeschnittene Detailansicht einer möglichen Ausbildung der Gelenkanordnung in der Spitze einer Dreieckslenkeranordnung,
- Fig. 3: einen Schnitt durch eine Gelenkanordnung nach Fig. 2,
- Fig. 4: die Teile nach Fig. 3 in Explosionsdarstellung vor ihrer Montage,
- Fig. 5: eine ähnliche Ansicht wie Fig. 4, jedoch in teilweise montierter Lage der Gelenkanordnung noch vor Einsetzen des geteilten Achskörpers,
- Fig. 6: eine ähnliche Darstellung wie Fig. 3, jedoch mit einem alternativen, außermittig geteilten Achskörper,
- Fig. 7: eine ähnliche Darstellung wie Fig. 6, jedoch mit einem alternativen, durchgehenden und axial über Sprengringe gesicherten Achskörper,
- Fig. 8: eine ähnliche Darstellung wie Fig. 7, jedoch mit einem weiteren alternativen, wiederum mittig geteilten Achskörper, dessen Teile über ein Zwischenstück aneinander gehalten sind.

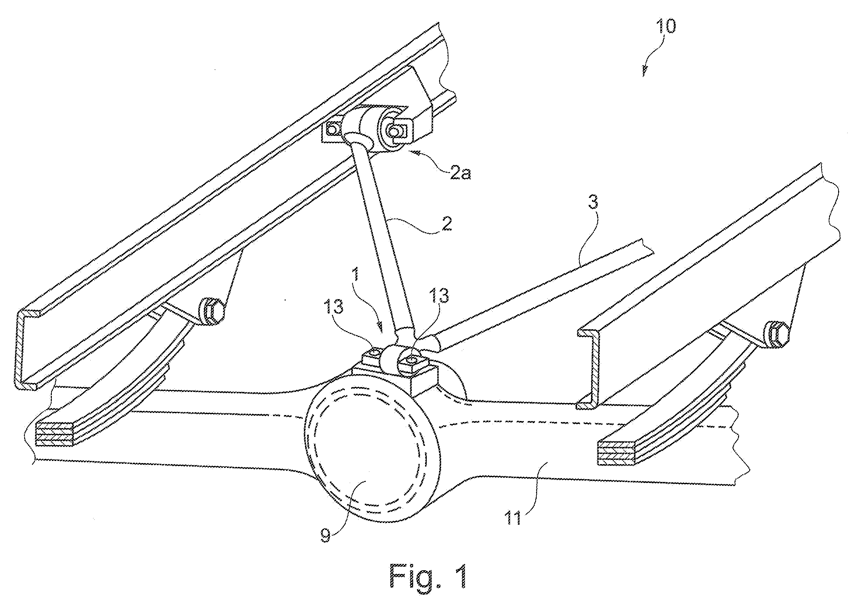

Der in Fig. 1 dargestellte Ausschnitt eines Fahrzeugs 10, zum Beispiel eine Nutzfahrzeugs oder eines Offroadfahrzeugs, umfasst zwei in einer Dreieckslenkeranordnung spitzwinklig und in Draufsicht V-förmig aufeinander zulaufende Lenker 2, 3. An der so gebildeten Dreiecksspitze greifen diese mittels einer Gelenkanordnung 1 an einer Fahrzeugachse 11, hier einer Hinterachse, an. Diese ist im bezüglich der Fahrzeugquerrichtung mittleren Bereich zur Aufnahme eines Differentials erweitert. Die Gelenkanordnung 1 kann damit auf dem oberen Ende dieses zur Aufnahme eines Differentials erweiterten Bereichs 9 der Hinterachse 11 montierbar sein und somit eine Querführung und Längsführung für diese Fahrzeugachse 11 bilden. Die hier zwei abstützenden Lenker 2, 3 können selbst in ihren oberen Bereichen 2a, 3a an zum Beispiel tragenden Längsrahmenteilen angebunden sein. Auch hier können ähnliche Gelenkanordnungen 1 Verwendung finden.

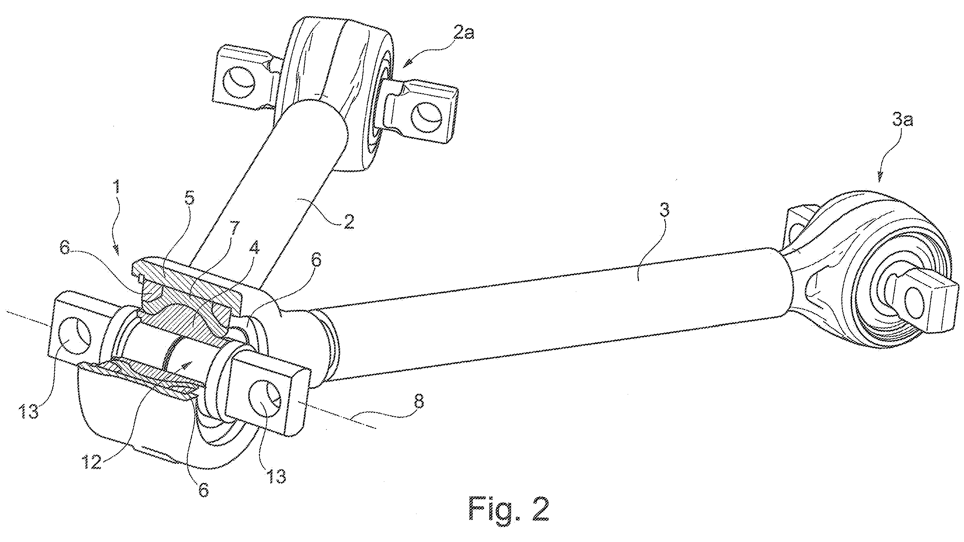

Dabei ist jeweils ein Achskörper 12, 112, 212, 312 der Gelenk- oder Lageranordnung 1 über beispielsweise Verschraubungen oder andere Halterungen gesichert. Diese greifen in Bohrungen 13 des Achskörpers 12, 112, 212, 312 ein. Details dieser Anordnung 1 sind auch in Figur 2 zu erkennen.

Darin wird auch deutlich, dass der Achskörper 12, 112, 212, 312 seinerseits eine ein- oder mehrstückige Gelenkkugel 4 durchgreift, wobei diese keine wirkliche Kugelgestalt aufweisen muss, sondern auch beispielsweise nach Art eines Ellipsoids, eines Paraboloids oder ähnlich geformt sein kann. In jedem Fall ist sie gegenüber einem sie zumindest bereichsweise umgebenden Gehäuse 5 oder einem oder mehreren Stützring(en) 6 oder deren Teilen über eine gummielastische Zwischenlage 7 beweglich gelagert.

Gemäß den hier gezeigten Ausführungsbeispielen bildet der Hülsenkörper einstückig die Gelenkkugel, so dass diese beide dasselbe Bezugszeichen 4 erhalten haben. Dies ist nicht zwingend, sondern der Hülsenkörper kann auch nur einen Bestandteil einer dann mehrstückigen Gelenkkugel ausbilden und beispielsweise in einen kugelförmigen Körper eingepresst sein.

Wie in der Zeichnung erkennbar ist, sind in allen Ausführungsbeispielen sowohl der Achskörper 12, 112, 212, 312 als auch eine ihm an dem unten noch näher definierten umlaufenden Spalt 14 zugewandte Grenzfläche der Gelenkkugel 4 jeweils über ihren gesamten Kontaktbereich und auch während der gesamten Lebensdauer der Gelenkanordnung 1 formstabil. Damit kann die Zwischenlage 7 unter einer sehr hohen Vorspannung montiert werden, wobei diese Vorspannung auch mit einer großen Kraft radial einwärts wirken und so eine Relativbewegung zwischen dieser Zwischenlage 7 und der Gelenkkugel 4 ausschließen kann. Trotz dieser großen radial einwärts wirkenden Kraft bleibt die Lagerung des Achskörpers 12, 112, 212, 312 unbeeinflusst. Dieser ist aufgrund seiner Formstabilität und der Formstabilität der ihn umgreifenden Gelenkkugel 4 in dieser mit stets gleicher, sehr kleiner Kraft "frei" drehbar. Das zum Drehen erforderliche Drehmoment muss nicht erst merkbare Reibungskräfte überwinden, sondern kann stets schon bei deutlich unter 1 Nm eine Verdrehung des Achskörpers 12, 112, 212, 312 ermöglichen.

Dadurch wird, wie eingangs bereits erwähnt, auch die Montage vereinfacht, da nicht erst wie bei einem direkten Kontakt des Achskörpers 12, 112, 212, 312 an ein Elastomer (zum Beispiel Gummi der Zwischenlage 7) hohe Reibungskräfte mittels Werkzeugkraft zur Ausrichtung des Achskörpers 12, 112, 212, 312 überwunden werden müssen, sondern dieser kann von Hand in die Gelenkkugel 4 eingesetzt und auch leicht von Hand so weit gedreht werden, dass seine Ausrichtung zur weiteren Montage an das Fahrzeug, zum Beispiel an den erweiterten Bereich 9 für ein Differential, wie in Figur 1 dargestellt, passend ist.

Gemäß dem hier gezeigten und sehr gut im Dauerbetrieb funktionierenden Ausführungsbeispiel ist die dem Achskörper zugewandte Grenzfläche der Gelenkkugel 4 als metallische Oberfläche ausgebildet, hier als Nitrierstahl oder Nitrierguss. Gleiches gilt für die Oberfläche des Achskörpers 12, 112, 212, 312. Beide Teile sind hier aus Stahl gebildet. Auch ein faserverstärkter Kunststoff kann bei relativ geringer Dauerbelastung in Betracht kommen.

Die dem Achskörper 12, 112, 212, 312 zugewandte Grenzfläche der Gelenkkugel ist hier als radial innen liegende Fläche eines formstabilen und den Achskörper 12, 112, 212, 312 führenden Hülsenkörpers ausgebildet, an den außen der elastische Werkstoff der Zwischenlage 7 fest anvulkanisiert ist; auch ein Kleben oder anderer fester Zusammenhalt ist möglich. In jedem Fall ist ein Abriss zwischen der Zwischenlage 7 und dem Gelenkkörper 4 ausgeschlossen, da eine Relativbewegung zwischen deren einander zugewandten Grenzflächen durch den festen, flächigen Kontakt auch bei Drehung des Achskörpers 12, 112, 212, 312 oder bei großer Biegung nicht vorkommt.

Dadurch, dass die gummielastische Zwischenlage 7 radial außen an den Stützring 6 radial innen an die Gelenkkugel 4 anvulkanisiert ist, kann zusammen mit dem eingesetzten Achskörper 12, 112, 212, 312 eine vorkonfektionierte Baueinheit gebildet werden, die unter Vorspannung in das Gehäuse 5 eingepresst und durch einen Sicherungsring gegen axiale Bewegung gesichert werden kann (siehe Fig. 2).

Die genannte Beweglichkeit umfasst zumindest eine begrenzte Drehbeweglichkeit um die Achse 8 des Achskörpers 12, 112, 212, 312. Eine solche Drehbarkeit muss in herkömmlichen Gelenken dieser Art über die gummielastische Zwischenlage übertragen werden. Gemäß der Erfindung ist der Achskörper 12, 112, 212, 312 durch einen Spalt 14 mit radialem Abstand zur Gelenkkugel 4 in dieser drehbar angeordnet. Dadurch ergibt sich hier über den Spalt 14 eine freie Drehbarkeit, die auch große Auslenkungen von 30 oder mehr Grad zulässt; die Gelenkkugel 4 muss hingegen keine großen Auslenkungen gegenüber dem zumindest einen Stützring 6 oder dem Gehäuse 5 ausführen, die zu einem Abreißen oder Durchrutschen der Zwischenlage 7 gegenüber dem Gehäuse 5 oder dem zumindest einen Stützring 6 führen könnten.

Diese Zwischenlage 7 kann aus einem Gummiwerkstoff mit einer Stärke von beispielsweise von zehn bis fünfzehn Millimetern bestehen und dadurch einen hohen Dämpfungskomfort sicherstellen. Eine Gelenkanordnung mit einer solchen elastisch dämpfenden Zwischenlage 7 wird häufig auch als Molekulargelenk bezeichnet.

Der Spalt 14 zwischen dem Achskörper 12, 112, 212, 312 einerseits und der Gelenkkugel 4 andererseits ist in radialer Richtung in einer Zehntelmillimetergrößenordnung, typisch mit einer Stärke von bis zu 0,25 Millimetern, erstreckt.

Dieser Spalt 14 kann zumindest teilweise mit Fett oder einem anderen Schmiermittel befüllt sein. Bei einer entsprechenden Abdichtung ist ein Einfetten auf Lebensdauer möglich. Die axialen Ränder des Spalts 14 sind daher über Dichtungen 15 gesichert, die sowohl den Austritt von Schmiermittel als auch den Eintritt von Schmutz und Staub verhindern. Zusätzlich oder alternativ kann die Gelenkkugel 4 an ihrem dem Spalt 14 zugewandten Bereich und/oder der Achskörper 12, 112, 212, 312 ganz oder teilweise mit einer reibungsvermindernden Beschichtung, etwa aus PTFE, oder separaten Hülsen mit guten tribologischen Eigenschaften versehen sein. In beiden Fällen ist damit eine Gleitlagerung des Achskörpers 12, 112, 212, 312 in der Gelenkkugel 4 erreicht und dennoch durch die Zwischenlage 7 das sehr komfortable und gut dämpfende Molekulargelenk erhalten, so dass die Vorteile zweier unterschiedlicher Gelenktypen gleichzeitig verwirklicht sind. Auch bei einer hohen Abwinklung der Lenker 2, 3 kommt es nicht zu einem Abreißen der Gummilage 7, sondern die Abwinklung wird zumindest hauptsächlich zwischen dem gleitgelagerten Achskörper 12, 112, 212, 312 und der Gelenkkugel 4 stattfinden. Auch eine Vorwinklung der Bauteile vor der Montage ist damit nicht mehr erforderlich.

Der Achskörper 12 ist in den hier gezeigten Ausbildungen nach den Figuren 2 bis 5 sowie 6 und 8 über seinen axialen Verlauf in zumindest zwei Teile 18, 19 geteilt, was besondere Montage- und Demontageerleichterungen bietet.

Gemäß der Ausbildung nach den Figuren 2 bis 5 verläuft die Teilung ungefähr axial mittig innerhalb der Gelenkanordnung 1.

Um die Gelenkanordnung 1 vorkonfektionieren und sicherstellen zu können, dass die Teile 18, 19 des Achskörpers 13 auch im noch nicht am Fahrzeug 10 anmontierten Zustand aneinander halten, können diese Teile 18, 19 über eine Presspassung 17 aneinander halterbar sein. Auch während des Transports der so vorkonfektionierten Baueinheit mit dem Achskörper und der Gelenkkugel 4 sowie der Zwischenlage 7 und dem oder den Stützring(en) 6 bleiben dann die Teile 18, 19 in ihrer Lage und unterliegen keiner Gefahr eines Herausfallens.

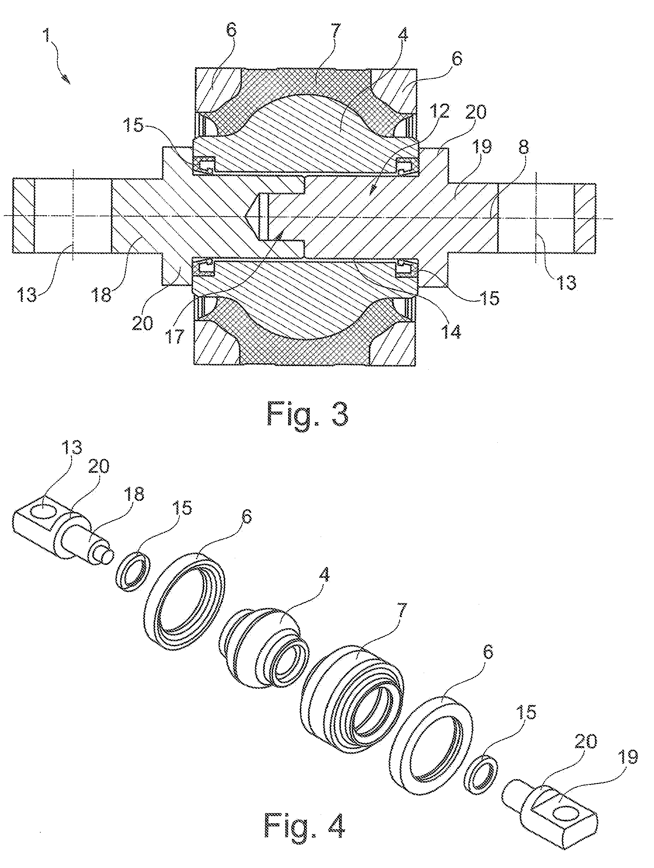

Weiter wird in Figur 3 deutlich, dass der Achskörper 12 auch über radial erweiterte Kragen 20 verfügt und diese von der Gelenkkugel 4 - und ggf. auch von dem Stützring 6 und dem Gehäuse 5 - axial beabstandet sind, so dass auch dadurch die drehbare Gleitlagerung des Achskörpers 12 gegenüber der Gelenkkugel 4 nicht eingeschränkt ist. Der axiale Abstand zwischen dem Kragen 20 und der Gelenkkugel 4 kann auch hier etwa bis zu 0,25 Millimeter betragen. Alternativ können hier auch axiale Gleitscheiben eingesetzt werden. In jedem Fall ist der Achskörper 12, 112, 212, 312 in der Gelenkkugel 4 durch Kragen 20, 120 oder ähnliche axiale Sicherungen gegen eine axiale Relativbewegung gesichert ist. Damit sind nur Torsions- und Drehbewegungen in der Gelenkanordnung möglich, nicht aber eine axiale Verschiebung des Achskörpers 12, 112, 212, 312. Zu dieser axialen Sicherung können auch Sprengringe, Simmerringe oder ähnliches eingesetzt werden. Auch bei axialer Krafteinwirkung findet daher keine Relativbewegung zwischen Achskörper 12, 112, 212, 312 und Elastomerlage 7 statt, ein Gummiabrieb wird verhindert.

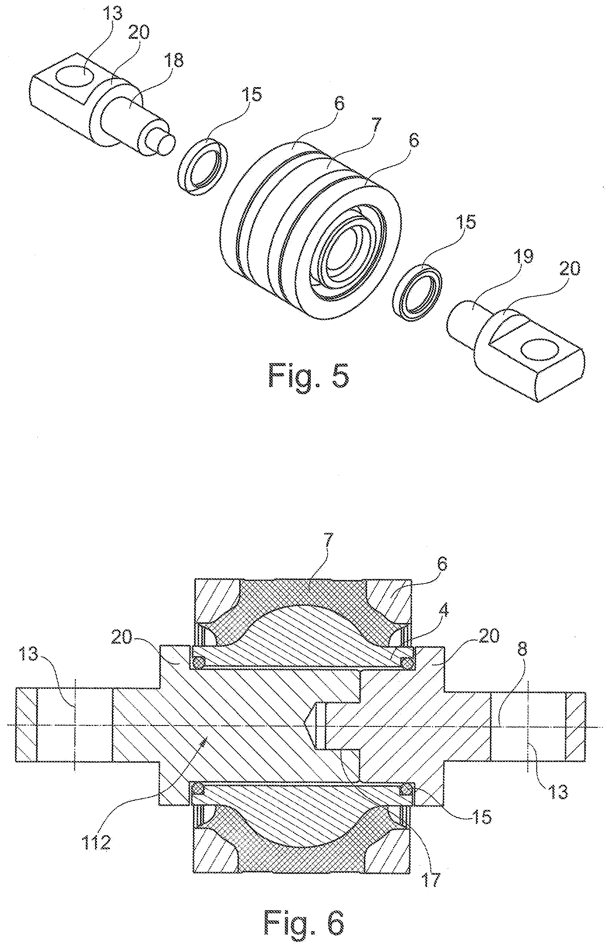

In Figur 6 ist ein prinzipiell ähnlicher Achskörper 112 dargestellt, der jedoch außermittig geteilt ist. Auch damit kann eine erfindungsgemäße Gelenkanordnung 1 gebildet sein.

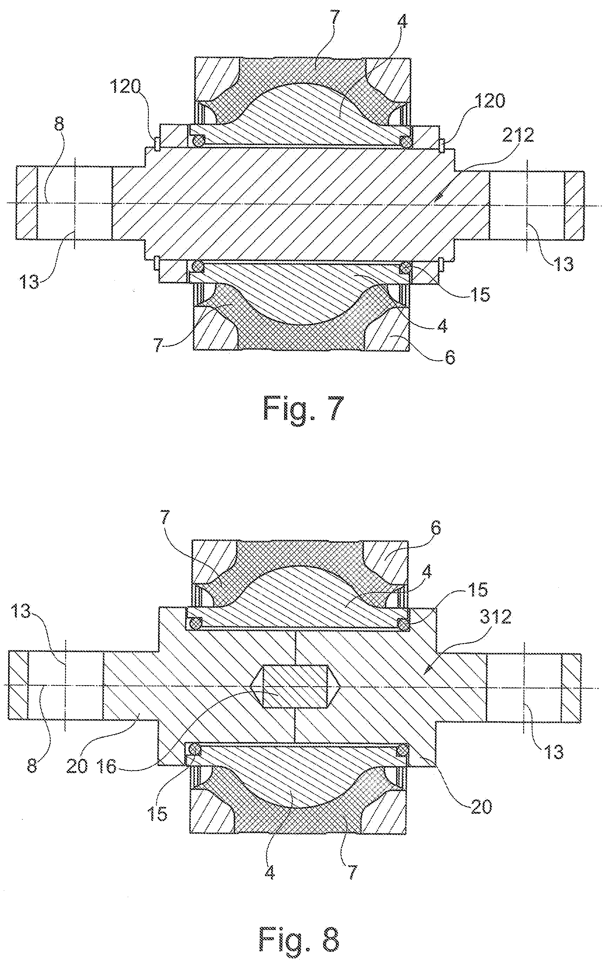

Der Achskörper 212 gemäß Figur 7 ist über seinen axialen Verlauf nicht geteilt. Er kann dennoch durch die Gelenkkugel 4 hindurchgeschoben werden, da hier keine festen Kragen 20 vorgesehen sind - wie im ersten Ausführungsbeispiel -, sondern die gegen axiale Verschiebung sichernden Kragen 120 hier durch nach der Montage einsetzbare Sprengringe gebildet sind.

In Figur 8 ist ein alternativer Achskörper 312 dargestellt, dessen Teile für eine einfache Montage bei Verringerung der Anzahl unterschiedlicher Bauteile als Gleichteile ausgebildet sind. Diese sind hier über ein separates Verbindungsstück 16 aneinander wiederum in einem Presssitz halterbar. Auch das Zwischenstück 16 kann wie der ganze Achskörper 12, 112, 212, 312 ein Schmiedeteil ausbilden.

Mit der Erfindung wird es auch möglich, dass in dasselbe Gehäuse 5 und dieselbe Gelenkkugel 4 unterschiedliche Achskörper 12, 112, 212, 312 mit zum Beispiel unterschiedlichen Längen und unterschiedlichen Abständen der Bohrungen 13 einsetzbar sind. Damit ist eine hohe Flexibilität der Fertigung bei minimalem Aufwand erreicht. Auch unterschiedliche Materialien zwischen dem Achskörper 12, 112, 212, 312 - zum Beispiel ausgebildet als Schmiedeteil - und der Gelenkkugel 4 - zum Beispiel ausgebildet als Gussteil - sind möglich.

Derartige Gelenkanordnungen können an verschiedenen Stellen im Fahrzeug 10 zum Einsatz kommen, insbesondere in Fahrwerks- oder Lenkungsteilen.

### Bezugszeichenliste:

- 1: Gelenkanordnung,
- 2: Lenker,
- 3: Lenker,
- 2a: oberes Lenkerende,
- 3a: oberes Lenkerende,
- 4: Gelenkkugel,
- 5: Gehäuse,
- 6: Stützring,
- 7: Zwischenlage,
- 8: Achse,
- 9: erweiterter Bereich,
- 10: Fahrzeug,
- 11: Fahrzeugachse,
- 12, 112, 212, 312: Achskörper,
- 13: Bohrungen des Achskörpers,
- 14: Spalt,
- 15: Dichtungen des Spalts,
- 16: Zwischenstücke,
- 17: Presspassung,
- 18: erster Teil des Achskörpers,
- 19: zweiter Teil des Achskörpers,
- 20: erweiterter Kragen,
- 120: Kragen

## Patentansprüche

1. Gelenkanordnung (1) für ein Kraftfahrzeug (10), insbesondere in Fahrwerks- oder Lenkungsteilen, bei der eine von einem Achskörper (12;112;212;312) durchgriffene Gelenkkugel (4) gegenüber einem die Gelenkkugel (4) umgebenden Gehäuse (5) über eine gummielastische Zwischenlage (7) beweglich gelagert ist, wobei eine dem Achskörper (12;112;212;312) zugewandte Grenzfläche der Gelenkkugel (4) als radial innen liegende Fläche eines formstabilen Hülsenkörpers (4) ausgebildet ist, wobei der Achskörper (12;112;212;312) in dem Hülsenkörper (4) drehbar angeordnet ist, wobei zwischen dem Achskörper (12;112;212;312)
und der Gelenkkugel (4) ein Spalt (14) in radialer Richtung ausgebildet ist,
**dadurch gekennzeichnet, dass**
- die Gelenkkugel (4) gegenüber einem oder mehreren Stützring(en) (6) über die gummielastische Zwischenlage (7) beweglich gelagert ist,
- der Achskörper (12;112;212;312) im Hülsenkörper (4) durch axiale Sicherungen (20;120) gegen eine axiale Bewegung des Achskörpers(12;112;212;312) gegenüber dem Hülsenkörper (4) gesichert ist,
- der Hülsenkörper einteilig mit der Gelenkkugel (4) ausgebildet ist und
- die axialen Ränder des Spalts (14) über Dichtungen (15) gesichert sind.

2. Gelenkanordnung (1) nach Anspruch 1,
**dadurch gekennzeichnet,**
**dass** der Achskörper (12;112;212;312) und eine ihm zugewandte Grenzfläche der Gelenkkugel (4) jeweils über ihren gesamten Kontaktbereich formstabil sind.

3. Gelenkanordnung (1) nach Anspruch 2,
**dadurch gekennzeichnet,**
**dass** zumindest die dem Achskörper (12;112;212;312) zugewandte Grenzfläche der Gelenkkugel (4) als metallische Oberfläche ausgebildet ist.

4. Gelenkanordnung (1) nach Anspruch 3,
**dadurch gekennzeichnet,**
**dass** die dem Achskörper (12;112;212;312) zugewandte Grenzfläche der Gelenkkugel (4) und die der Gelenkkugel (4) zugewandte Grenzfläche des Achskörpers (12;112;212;312) aus Stahl, insbesondere Nitrierstahl, gebildet sind.

5. Gelenkanordnung (1) nach einem der Ansprüche 1 bis 4,
**dadurch gekennzeichnet,**
**dass** an der Außenseite der Gelenkkugel (4) der elastische Werkstoff der Zwischenlage (7) anvulkanisiert ist.

6. Gelenkanordnung (1) nach einem der Ansprüche 1 bis 5,
**dadurch gekennzeichnet,**
**dass** zur Drehung des Achskörpers (12;112;212;312) im Hülsenkörper (4) ein Drehmoment von weniger als 1 Nm erforderlich ist.

7. Gelenkanordnung (1) nach
einem der Ansprüche 1 bis 6,
**dadurch gekennzeichnet,**
**dass** der Achskörper (12;112;212;312) mit radialem Abstand zu der Gelenkkugel (4) angeordnet ist.

8. Gelenkanordnung (1) nach Anspruch 7,
**dadurch gekennzeichnet,**
**dass** die Gelenkkugel (4) an ihrer dem Spalt (14) zugewandten Bereich zumindest teilweise mit einer reibungsvermindernden Beschichtung versehen ist.

9. Gelenkanordnung (1) nach einem der Ansprüche 1 bis 8,
**dadurch gekennzeichnet,**
**dass** der Achskörper (12;112;312) über seinen axialen Verlauf in zumindest zwei Teile (18;19) geteilt ist.

10. Gelenkanordnung (1) nach Anspruch 9,
**dadurch gekennzeichnet,**
**dass** die Teile des Achskörpers (12;112;312) über eine Presspassung (17) aneinander halterbar sind.

11. Gelenkanordnung (1) nach einem der Ansprüche 9 bis 10,
**dadurch gekennzeichnet,**
**dass** die Teile des Achskörpers (312) über ein separates Verbindungsstück (16) aneinander halterbar sind.

12. Gelenkanordnung (1) nach einem der Ansprüche 1 bis 11,
**dadurch gekennzeichnet,**
**dass** die G elenkanordnug (1) im Bereich der Spitze einer Dreieckslenkeranordnung (2,3) gebildet ist.

13. Gelenkanordnung (1) nach einem der Ansprüche 1 bis 12,
**dadurch gekennzeichnet,**
**dass** die Gelenkkugel (4) mit dem eingesetzten Achskörper (12;112;212;312) und der Zwischenlage (7) zu einer gemeinsam montierbaren Baueinheit vorkonfektioniert ist.

14. Fahrwerks- oder Lenkungsteil für Kraftfahrzeug,
mit einer Gelenkanordnung nach einem der Ansprüchen 1 bis 13.

## Claims

1. Joint arrangement (1) for a motor vehicle (10), in particular in chassis or steering parts, in the case of which a joint ball (4) which is extended through by a pin body (12; 112; 212; 312) is mounted, movably relative to a housing (5) surrounding the joint ball (4), by way of a rubber-elastic intermediate layer (7), wherein a boundary surface, facing toward the pin body (12; 112; 212; 312), of the joint ball (4) is formed as a radially inner surface of a dimensionally stable sleeve body (4), wherein the pin body (12; 112; 212; 312) is arranged rotatably in the sleeve body (4), wherein a gap (14) is formed in a radial direction between the pin body (12; 112; 212; 312) and the joint ball (4),
**characterized in that**
- the joint ball (4) is mounted movably relative to one or more support rings (6) by way of the rubber-elastic intermediate layer (7),
- the pin body (12; 112; 212; 312) is secured in the sleeve body (4), such that the pin body (12; 112; 212; 312) is prevented from moving axially relative to the sleeve body (4), by way of axial securing means (20; 120),
- the sleeve body is formed in one piece with the joint ball (4) and
- the axial edges of the gap (14) are secured by way of seals (15).

2. Joint arrangement (1) according to Claim 1,
**characterized**
**in that** the pin body (12; 112; 212; 312) and a boundary surface, facing toward it, of the joint ball (4) are each dimensionally stable over their entire contact region.

3. Joint arrangement (1) according to Claim 2,
**characterized**
**in that** at least that boundary surface of the joint ball (4) which faces toward the pin body (12; 112; 212; 312) is formed as a metallic surface.

4. Joint arrangement (1) according to Claim 3,
**characterized**
**in that** that boundary surface of the joint ball (4) which faces toward the pin body (12; 112; 212; 312) and that boundary surface of the pin body (12; 112; 212; 312) which faces toward the joint ball (4) are formed from steel, in particular nitrided steel.

5. Joint arrangement (1) according to one of Claims 1 to 4,
**characterized**
**in that** the elastic material of the intermediate layer (7) is vulcanized onto the outer side of the joint ball (4) .

6. Joint arrangement (1) according to one of Claims 1 to 5,
**characterized**
**in that** a torque of less than 1 Nm is required for the rotation of the pin body (12; 112; 212; 312) in the sleeve body (4).

7. Joint arrangement (1) according to one of Claims 1 to 6,
**characterized**
**in that** the pin body (12; 112; 212; 312) is arranged with a radial spacing to the joint ball (4).

8. Joint arrangement (1) according to Claim 7,
**characterized in that** the joint ball (4) is, on its region facing toward the gap (14), at least partially equipped with a friction-reducing coating.

9. Joint arrangement (1) according to one of Claims 1 to 8,
**characterized**
**in that** the pin body (12; 112; 312) is, over its axial profile, divided into at least two parts (18; 19).

10. Joint arrangement (1) according to Claim 9,
**characterized**
**in that** the parts of the pin body (12; 112; 312) can be held on one another by way of an interference fit (17).

11. Joint arrangement (1) according to either of Claims 9 and 10,
**characterized**
**in that** the parts of the pin body (312) can be held on one another by way of a separate connecting piece (16).

12. Joint arrangement (1) according to one of Claims 1 to 11,
**characterized**
**in that** the joint arrangement (1) is formed in the region of a tip of a triangular link arrangement (2, 3).

13. Joint arrangement (1) according to one of Claims 1 to 12,
**characterized**
**in that** the joint ball (4) is prefabricated, together with the inserted pin body (12; 112; 212; 312) and the intermediate layer (7), to form a jointly installable structural unit.

14. Chassis or steering part for a motor vehicle, having a joint arrangement according to one of Claims 1 to 13.

## Revendications

1. Système d'articulation (1) pour un véhicule automobile (10), en particulier dans des pièces du châssis ou de direction, dans lequel une rotule d'articulation (4) à travers laquelle s'engage un corps d'essieu (12 ; 112 ; 212 ; 312) est supportée de manière déplaçable par rapport à un boîtier (5) entourant la rotule d'articulation (4) par le biais d'une couche intermédiaire ayant l'élasticité du caoutchouc (7), une surface limite de la rotule d'articulation (4) tournée vers le corps d'essieu (12 ; 112 ; 212 ; 312) étant réalisée sous forme de surface, située radialement à l'intérieur, d'un corps de douille (4) de forme stable, le corps d'essieu (12 ; 112 ; 212 ; 312) étant disposé de manière à pouvoir tourner dans le corps de douille (4), une fente (14) étant réalisée dans la direction radiale entre le corps d'essieu (12 ; 112 ; 212 ; 312) et la rotule d'articulation (4),
**caractérisé en ce que**
- la rotule d'articulation (4) est supportée de manière déplaçable par rapport à une ou plusieurs bagues de support (6) par le biais de la couche intermédiaire ayant l'élasticité du caoutchouc (7),
- le corps d'essieu (12 ; 112 ; 212 ; 312) est fixé dans le corps de douille (4) par des fixations axiales (20 ; 120) à l'encontre d'un mouvement axial du corps d'essieu (12 ; 112 ; 212 ; 312) par rapport au corps de douille (4),
- le corps de douille est réalisé d'une seule pièce avec la rotule d'articulation (4) et
- les bords axiaux de la fente (14) sont fixés par le biais de joints d'étanchéité (15).

2. Système d'articulation (1) selon la revendication 1,
**caractérisé en ce que**
le corps d'essieu (12 ; 112 ; 212 ; 312) et une surface limite de la rotule d'articulation (4) tournée vers celui-ci ont à chaque fois une forme stable sur toute leur région de contact.

3. Système d'articulation (1) selon la revendication 2, **caractérisé en ce qu'**au moins la surface limite de la rotule d'articulation (4) tournée vers le corps d'essieu (12 ; 112 ; 212 ; 312) est réalisée sous forme de surface métallique.

4. Système d'articulation (1) selon la revendication 3,
**caractérisé en ce que**
la surface limite de la rotule d'articulation (4) tournée vers le corps d'essieu (12 ; 112 ; 212 ; 312) et la surface limite du corps d'essieu (12 ; 112 ; 212 ; 312) tournée vers la rotule d'articulation (4) sont formées d'acier, en particulier d'acier nitruré.

5. Système d'articulation (1) selon l'une quelconque des revendications 1 à 4,
**caractérisé en ce que**
le matériau élastique de la couche intermédiaire (7) est appliqué par vulcanisation sur le côté extérieur de la rotule d'articulation (4).

6. Système d'articulation (1) selon l'une quelconque des revendications 1 à 5,
**caractérisé en ce que**
pour la rotation du corps d'essieu (12 ; 112 ; 212 ; 312) dans le corps de douille (4), un couple inférieur à 1 Nm est nécessaire.

7. Système d'articulation (1) selon l'une quelconque des revendications 1 à 6, **caractérisé en ce que** le corps d'essieu (12 ; 112 ; 212 ; 312) est disposé à distance radiale de la rotule d'articulation (4) .

8. Système d'articulation (1) selon la revendication 7,
**caractérisé en ce que**
la rotule d'articulation (4) est pourvue au niveau de sa région tournée vers la fente (14) au moins en partie d'un revêtement réduisant les frottements.

9. Système d'articulation (1) selon l'une quelconque des revendications 1 à 8,
**caractérisé en ce que**
le corps d'essieu (12 ; 112 ; 312) est divisé en au moins deux parties (18 ; 19) sur son étendue axiale.

10. Système d'articulation (1) selon la revendication 9,
**caractérisé en ce que**
les parties du corps d'essieu (12 ; 112 ; 312) peuvent être retenues les unes contre les autres par un ajustement par pressage (17).

11. Système d'articulation (1) selon l'une quelconque des revendications 9 à 10,
**caractérisé en ce que**
les parties du corps d'essieu (312) peuvent être retenues les unes contre les autres par le biais d'une pièce de connexion séparée (16).

12. Système d'articulation (1) selon l'une quelconque des revendications 1 à 11,
**caractérisé en ce que**
le système d'articulation (1) est formé dans la région de la pointe d'un agencement à bras triangulaire (2, 3).

13. Système d'articulation (1) selon l'une quelconque des revendications 1 à 12,
**caractérisé en ce que**
la rotule d'articulation (4) est préfabriquée avec le corps d'essieu inséré (12 ; 112 ; 212 ; 312) et la couche intermédiaire (7) pour former une unité structurelle pouvant être montée en commun.

14. Pièce de châssis ou de direction pour véhicules automobiles, comprenant un système d'articulation selon l'une quelconque des revendications 1 à 13.
